# EUROPÄISCHE PATENTSCHRIFT

(11) **EP 2 226 217 B1**
(45) Veröffentlichungstag und Bekanntmachung des Hinweises auf die Patenterteilung: **20.08.2014**
(21) Anmeldenummer: 10001374.7
(22) Anmeldetag: 11.02.2010
(51) Int. Cl.: B60Q 9/00, B60W 50/14, B60Q 1/48, G01S 15/87, G01S 15/93, B60W 50/00, G01S 13/93

(54) **Akustisches, taktil unterstützbares Fahrzeuginsasseninformationssystem**
Information system for passenger of a vehicle using acoustic and tactile means
Système d'information acoustique et tactile pour les occupants d'un véhicule

(30) Priorität: 07.03.2009 DE 102009012242
(43) Veröffentlichungstag der Anmeldung: 08.09.2010
(73) Patentinhaber: Rheinmetall Landsysteme GmbH, 29345 Unterlüß (DE)
(72) Erfinder: Hass, Frank, 24235 Wendtorf (DE); Ernst, Michael, 24222 Schwentinental (DE); Geissler, Petra, 24161 Altenholz (DE); Wende, Wolfram, 24536 Neumünster (DE)
(74) Vertreter: Dietrich, Barbara

(56) Entgegenhaltungen:
- EP-A2- 1 049 051
- EP-A2- 1 475 765
- WO-A1-2005/042300
- WO-A1-2008/139018
- DE-A1- 10 345 680
- DE-A1- 19 623 469
- DE-A1-102005 059 906

## Beschreibung

Die Erfindung betrifft ein akustisches/taktiles Fahrzeuginsasseninformationssystem zur Überwachung eines äußeren Fahrzeugumfeldes, insbesondere für gepanzerte Fahrzeuge.

In gepanzerten Fahrzeugen mit schallisolierenden Schutzelementen oder Fahrzeugen, die aus Komfortgründen akustisch gut isoliert sind, werden natürliche Geräusche, wie etwa die Bodenberührung der Wanne eines Panzers bei Geländefahrten oder das seitliche Berühren eines Hindernisses durch das entsprechende Fahrzeug, häufig von der Besatzung nicht mehr wahrgenommen. Sofern derartige Geräusche aber wahrgenommen werden, ist das entsprechende Ereignis bereits eingetreten, d.h. der Fahrzeugboden ist bereits durch den Bodenkontakt oder die Wandberührung beschädigt oder der Reifen des Fahrzeuges ist bereits geplatzt etc.

Bekannt sind akustische Hinweis- und Warnsysteme aus dem zivilen Fahrzeugbereich, wie beispielsweise die Einparkhilfen für Kraftfahrzeuge.

Eine Abstandswarnung für Fahrzeuge beschreibt die DE 10 2008 005 879 A1. Eine optisch-akustische Rückfahr- und Einparkhilfe für Fahrzeuge mit einer Anhängerkupplung wird in der DE 20 2005 012 133 U1 näher betrachtet. Eine weitere Einparkhilfe ist der DE 20 2008 005 431 U1 entnehmbar, eine Abstandskontrolleinheit der DE 20 2007 013 190 U1.

Umgebungsinformationen als Hilfen werden in der DE 10 2007 022 523 A1 sowie der DE 10 2006 061 390 A1 einbezogen.

Derartige akustische Einrichtungen erzeugen ein künstliches Signal, das von dem Fahrer des entsprechenden Fahrzeuges erst interpretiert werden muss. So wird bei bekannten Einparkhilfen ein Piepton erzeugt, wobei bei Unterschreiten eines Mindestabstandes die Taktfrequenz aufeinanderfolgender Töne erhöht wird. In einigen Fahrzeugen, beispielsweise von Mercedes Benz, erfolgt zudem eine Sichtbarmachung des Abstandes durch Lichtdioden, die farblich gekennzeichnet und in Anzahl die Wahrscheinlichkeit einer Kollision mit einem anderen Fahrzeug oder Objekt signalisieren.

Die DE 10 2005 059 906 A1 betrifft ein Verfahren zur Ausgabe einer akustischen Warnung, das einem Fahrer bei einer auftretenden Gefahr in einer angepassten Weise warnt. In Abhängigkeit von der Relevanz eines Ereignisses für das Fahrzeug wird entweder eine verbale oder eine nonverbale akustische Warnung ausgegeben. Die verbale Warnung ist dann vorgesehen, wenn die Gefahr von niedrigerer Relevanz ist und der Fahrer noch hinreichend Zeit hat, die ihm gegebene Information zu verarbeiten. Als nonverbale Warnungen sind beispielsweise dissonante Töne, ein Unfallgeräusch oder menschliche Schreie hinterlegt. Diese Warnungen werden über mehrere Lautsprecher ausgegeben, wobei die Ansteuerung der Lautsprecher räumlich wirkend erfolgt, sodass die Warnung aus der Richtung zu kommen scheint, aus der auch die Gefahr für das Fahrzeug droht.

Aus der EP 1 475 765 A2 ist eine Vorrichtung zur Bestimmung einer Durchfahrtsmöglichkeit für Fahrzeuge bekannt, die dazu dient, abzuschätzen, ob ein Fahrzeug bezüglich seiner Höhe und / oder Breite zwischen Hindernissen hindurch fahren kann. Die Vorrichtung verfügt über eine Anzeigeeinheit zur optischen Ausgabe der Warnhinweise sowie einen daran angeschlossenen Lautsprecher zur akustischen Abgabe der Warnung. Eine weitere motorische Einheit realisiert die haptische Rückwirkung.

Die EP 1 049 051 A2 beschäftigt sich mit einem Informationssystem in einem Fahrzeug mit mehreren Informationsquellen zur Ausgabe einer jeweils zugehörigen Information bei Vorliegen einer jeweils zugehörigen Informationserzeugungsbedingung. Als Ausgabetyp werden unter anderem optische, akustische, haptische, geschmackliche und temperatursensitive Systeme vorgeschlagen. Eine akustische Information ist in Form eines Glasklirrgeräusches oder eines Knalls oder eines Bremsenquitschgeräusches möglich. Die Bestimmung der Dringlichkeitsstufe des einzelnen Ereignisses und deren einzelnen Ausgabe schützt den Fahrzeuginsassen vor Reizüberflutung, sodass insbesondere sicherheitskritische Informationen vom Fahrzeugführer zuverlässig wahrgenommen werden können. Eine Zuordnung der abgelegten Geräusche zu den Ereignissen und deren realen Geräuschen wird nicht weiter angesprochen.

Die WO 2005/042300 A1 betrifft ein Spurhaltesystem für ein Kraftfahrzeug und ein Betriebsverfahren. Wird ein Verlassen der Fahrbahn erkannt, kann als akustische Warnung ein Nagelband-Rattergeräusch seitenspezifisch auf derjenigen Fahrzeugseite abgegeben werden, auf der das Fahrzeug die Fahrspur zu verlassen droht. Derartige akustische Warnsignale werden hierbei jedoch als Nachteil gesehen, sodass vorgeschlagen wird, nur eine Vibrationseinrichtung für den Fahrzeugführer einzubinden. Diese wird in den Fahrzeugsitz eingebunden. Eine taktile Information für den Fahrzeugführer bezüglich der Einbehaltung der Fahrspur dieser Art besitzt beispielsweise der Citroen C6. In den Fällen, wo ein gewisser Seitenabstand nicht eingehalten wird, wird ein Vibrieren im Fahrersitz erzeugt, wobei ein linkes Vibrieren darauf hinweist, dass der Abstand an der linken Fahrzeugseite bedenklich ist, während ein Vibrieren in der rechten Fahrerseite angibt, dass der seitliche Abstand an der rechten Fahrzeugseite durch das Warnsystem als nicht ausreichend angesehen wird.

Die DE 103 45 680 A1 umfasst eine Anordnung zur akustisch unterstützten Navigation. Durch Auswertung zeitlich aufeinander folgender Positionen sich annähernder Objekte ermittelt ein Annäherungssensor sich annähernde Objekte und steuert die Ausgabemittel mit Hilfe von in einem Speicher gespeicherten Klangobjektdaten. Abhängig vom Annäherungscharakter wird ein akustisches Warnsignal über Lautsprecher so ausgegeben, dass zumindest die richtungsmäßige Zuordnung des sich annähernden Objektes aus einem zumindest zweidimensionalen Klangeindruck unmittelbar entnehmbar ist. Grundsätzlicher Charakter des Klangobjektes kann ein gesprochener Hinweis, ein Klingelgeräusch, ein Motorgeräusch etc. sein. Wird von rechts, hinten ein sich näherndes Fahrzeug ermittelt, so wird die Simulation eines Motorgeräusches aus dem Speicher abgerufen und dieses über das Sound-System derart ausgegeben, dass ein von rechts, hinten sich annäherndes Fahrzeug klanglich wiedergegeben wird.

Insbesondere Warntöne in unterschiedlichen Frequenzen und Lautstärken für unterschiedlich akut auftretende Ereignisse können in der Regel vom Bediener eines gepanzerten Fahrzeuges in Stresssituationen aber nicht zuverlässig zugeordnet werden, und zwar insbesondere dann nicht, wenn vor unterschiedlichen Ereignissen gewarnt werden soll.

Der Erfindung liegt die Aufgabe zugrunde, ein akustisches Fahrzeuginsasseninformationssystem zur Überwachung des Fahrzeugumfeldes anzugeben, bei dem die Besatzung des Fahrzeuges bereits vor Eintreten eines Ereignisses vor diesem gewarnt wird und bei dem die Besatzung die akustischen/taktilen Warnsignale auch in Stresssituationen zuverlässig den bevorstehenden Ereignissen zuordnet.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die Erfindung beruht im Wesentlichen auf dem Gedanken, dass von Sensoren aufgenommene Daten akustisch an den Fahrer und/oder Kommandanten des entsprechenden Fahrzeuges gemeldet werden, indem das entsprechende natürliche Geräusch simuliert wird, bevor das Ereignis real auftritt.

Diese Geräuschsimulation lässt dem Fahrer des entsprechenden Fahrzeuges genug Zeit, ein Ereignis abzuwenden und so z.B. einen Unfall zu verhindern.

Hierzu umfasst das Fahrzeuginsasseninformationssystem mehrere Sensoren zur Überwachung des äußeren Fahrzeugumfeldes, wobei die Sensoren mit einer Steuervorrichtung verbunden sind, welche mit mindestens einem akustischen Geräuschsimulator zusammenwirkt, der ein dem natürlichen Geräusch eines durch die Sensoren überwachten möglichen Ereignisses entsprechendes Geräusch erzeugt und auf eine Lautsprecheranordnung und/oder eine Stereo-Bordverständigungsanlage überträgt. Dabei ist die Steuervorrichtung derart ausgebildet, dass sie die von den Sensoren empfangenen Signale ständig überwacht und bei Überschreiten eines auf ein bestimmtes Ereignis bezogenen, vorgegebenen Grenzwertes den Geräuschsimulator aktiviert, wobei der Grenzwert derart gewählt ist, dass ein Simulationsgeräusch bereits vor Eintritt des tatsächlichen Ereignisses erzeugt wird.

Zur Überwachung der Bodenfreiheit des Fahrzeuges, insbesondere bei Geländefahrten, aber auch zur Überwachung der Mindestabstände des Fahrzeuges beim Passieren von Engstellen im Gelände und beim Einfahren in Flugzeuge, können als Sensoren Ultraschallsensoren unterhalb des Fahrzeugbodens bzw. an den Fahrzeugecken befestigt werden, wobei der Geräuschsimulator derart ausgebildet ist, dass er die bei Berührung des Fahrzeugbodens mit dem Erdboden typischen Kratz- oder Knirschgeräusche erzeugt.

Zur Überwachung der bug- und/oder heckseitigen Abstände des Fahrzeuges von einem Hindernis können als Sensoren ebenfalls Ultraschallsensoren bug- und/oder heckseitig an dem Fahrzeug befestigt werden, wobei der Geräuschsimulator derart ausgebildet ist, dass er bei Aktivierung durch die Steuervorrichtung ein Unfallklirren erzeugt.

Auch zur Überwachung der maximalen Wattiefe beim Durchqueren von Gewässern können entsprechende Sensoren an dem Fahrzeug angeordnet werden, wobei der Geräuschsimulator derart ausgebildet ist, dass er bei Aktivierung durch die Steuervorrichtung ein Wasserplätschern erzeugt.

Ferner kann zur Überwachung des Fahrzeugumfeldes auf einen möglichen Beschuss entsprechende Sensoren (beispielsweise das an sich bekannte "Sniper Location System SLI") verwendet werden, wobei der Geräuschsimulator derart ausgebildet ist, dass er bei Aktivierung durch die Steuervorrichtung einen Schussknall erzeugt.

Die dem natürlichen Geräusch des jeweiligen Ereignisses entsprechenden akustischen Warnungen müssen nicht interpretiert werden. So bedeutet ein Unfallklirren, dass ein Unfall naht, ein Schussknall zeigt an, dass man beschossen werden wird. Der Fahrer und/oder der Kommandant müssen diese Signale nicht lernen, vielmehr werden sie auf diese Geräusche auch in Stresssituationen richtig reagieren, da die akustischen Warnsignale nicht fehl interpretiert werden können.

Damit beispielsweise bei einem gepanzerten Fahrzeug der Fahrer und/oder der Kommandant die Richtung des Geräusches erkennen können, sollten vorzugsweise vier Lautsprecher horizontal um den Fahrer und/oder um den Kommandanten herum angeordnet und ein Lautsprecher unter den Sitzen befestigt werden. Der Fahrer und/oder Kommandant wissen beispielsweise bei Ertönen eines Unfallklirrens dann nicht nur, dass ein Mindestabstand unterschritten wurde, sondern auch, dass der Mindestabstand beispielsweise vorne rechts unterschritten wurde.

Um Verwechslungen mit realen Geräuschen auszuschließen, können die simulierten Geräusche z.B. in einem unnatürlich tiefen Frequenzbereich abgespielt oder mit einem zusätzlichen Warnton unterlegt werden.

Eine taktile Unterstützung der akustischen Signale erhöht bekanntlich das Registrieren eines bevorstehenden Ereignisses durch die Fahrzeugbesatzung. Ob diese Unterstützung in den Sitz oder unter Gefechtseinsatz in einem Kopfhelm oder dergleichen eingebunden wird, ist abhängig der individuellen Ausgestaltung. Auch ein einfaches Vibrieren eines Lenkrades wäre möglich.

Weitere Einzelheiten und Vorteile der Erfindung ergeben sich aus den folgenden, anhand von Figuren erläuterten Ausführungsbeispielen.

Es zeigen:
- Fig. 1: einen Kampfpanzer mit mehreren an der Außenseite verdeckt angeordneten Sensoren eines erfindungsgemäßen akustischen Fahrzeuginsasseninformationssystems und
- Fig. 2: ein stark vereinfachtes elektrisches Blockschaltbild eines erfindungsgemäßen akustischen Fahrzeuginsasseninformationssystems.

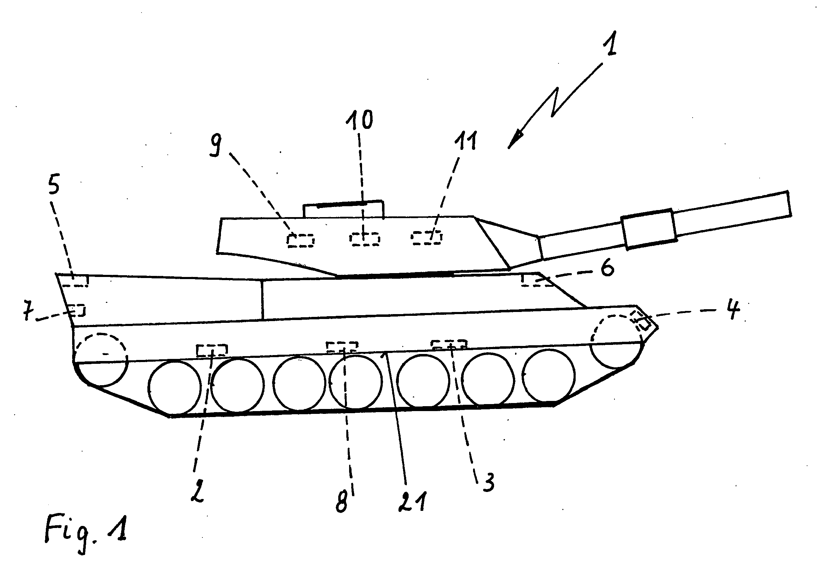

In Fig. 1 ist mit 1 ein Kampfpanzer bezeichnet, an dessen Außenwände mehrere verdeckt angeordnete und gestrichelt angedeutete Sensoren 2-11 eines erfindungsgemäßen akustischen Fahrzeuginsasseninformationssystems 12 zur Überwachung des äußeren Umfeldes des Panzers 1 befestigt sind.

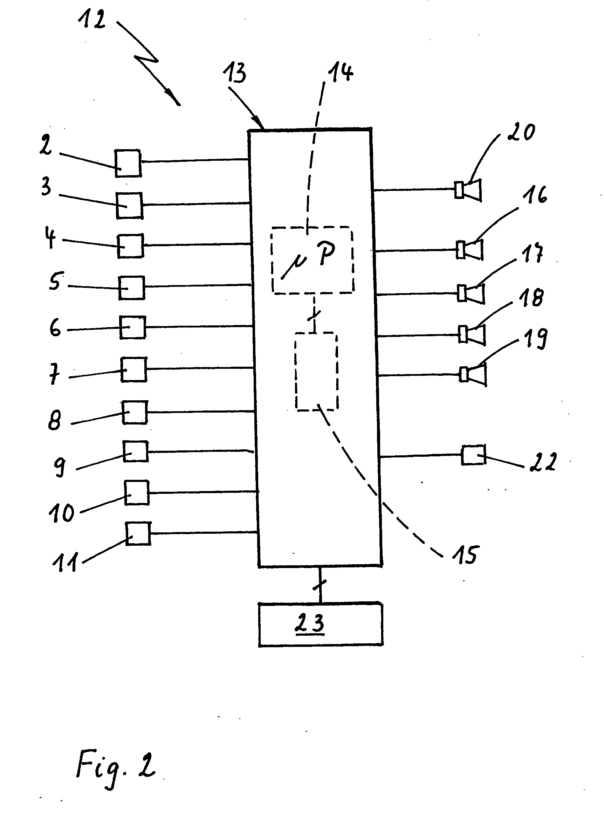

Die Sensoren 2-11 sind mit einer elektronischen Steuervorrichtung 13 verbunden (Fig. 2), die einen Mikroprozessor 14 umfasst und die Sensoren 2-11 ständig überwacht. Der Mikroprozessor 14 ist unter anderem mit einem programmierbaren Speicher 15 verbunden, in dem verschiedene vorgegebene digitale Klangbilder von Geräuschen abgespeichert sind, welche den zu überwachenden Ereignissen entsprechen. Der Mikroprozessor 14 bildet daher zusammen mit dem Speicher 15 einen Geräuschsimulator, der mit mehreren Lautsprechern 16-20 elektrisch verbunden ist.

Bei dem dargestellten Ausführungsbeispiel handelt es sich bei den Sensoren 2-7 um Ultraschallabstandssensoren, wobei die an dem Fahrzeugboden 21 befestigten Sensoren 2 und 3 die Bodenfreiheit des Kampfpanzers 1, insbesondere bei Geländefahrten, überwachen sollen. Sobald daher die Steuervorrichtung 13 aufgrund der empfangenen Signale der Sensoren 2, 3 einen Abstand zwischen Fahrzeugboden 21 und dem Erdboden detektiert, welcher einem vorgegebenen Sollwert entspricht, wird der Geräuschsimulator aktiviert, d.h. der Mikroprozessor 14 greift auf den diesen Sensoren 2, 3 zugeordneten Speicherbereich des Speichers 15 zu und überträgt die entsprechenden digitalen Signale auf eine nicht dargestellte Einheit, welche die digitalen Geräuschsignale in entsprechende analoge Geräuschsignale umwandelt. Diese Geräuschsignale werden dann den Lautsprechern 16-20 zugeführt, so dass der Fahrer die bei Berührung des Fahrzeugbodens 21 mit dem Erdboden typischen Kratz- oder Knirschgeräusche wahrnimmt, obwohl tatsächlich noch keine Berührung des Fahrzeugbodens 21 mit dem Erdboden stattgefunden hat. Dabei können die simulierten Geräusche von dem Geräuschsimulator in einem gegenüber entsprechenden natürlichen Geräuschen tieferen Frequenzbereich erzeugt werden, um simulierte und tatsächliche Geräusche sicher unterscheiden zu können.

Die Sensoren 4 und 5 dienen bei dem dargestellten Ausführungsbeispiel zur Überwachung der Mindestabstände des Kampfpanzers 1 beispielsweise beim Passieren von Engstellen im Gelände und beim Einfahren in Flugzeuge, wobei auch in diesem Fall der Geräuschsimulator die bei Berührung der Fahrzeugseiten mit dem Hindernis typischen Kratz- oder Knirschgeräusche erzeugt, wenn ein vorgegebener Grenzwert überschritten ist.

Zur Überwachung der bug- und/oder heckseitigen Abstände des Kampfpanzers 1 von einem Hindernis sind bug- und heckseitig an dem Kampfpanzer 1 die Sensoren 6 und 7 befestigt, wobei bei Aktivierung des Geräuschsimulators durch diese Sensoren 6, 7 ein Unfallklirren erzeugt wird.

Der mit 8 bezeichnete Sensor dient zur Überwachung der maximalen Wattiefe beim Durchqueren des Kampfpanzers 1 von Gewässern, wobei der Geräuschsimulator bei seiner Aktivierung durch diesen Sensor 8 als Geräusch ein Wasserplätschern erzeugt.

Schließlich dienen die Sensoren 9-11 zur Überwachung des Fahrzeugumfeldes auf einen möglichen Beschuss. Bei Aktivierung des Geräuschsimulators durch diese Sensoren 9, 10 wird als Geräusch ein Schussknall erzeugt.

Die aus den Lautsprechern 16-19 bestehende Anordnung ist horizontal rund um den Fahrer des Kampfpanzers 1 angeordnet, damit der Fahrer die Richtung des Geräusches erkennen kann, während der Lautsprecher 20 unter dem Sitz des Fahrers des Kampfpanzers 1 angeordnet ist, um ein Ereignis unterhalb des Fahrzeugbodens 21 zu simulieren.

Die Erfindung ist selbstverständlich nicht auf das vorstehend beschriebene Ausführungsbeispiel beschränkt. So muss es sich bei den Sensoren insbesondere nicht zwingend um Ultraschallsensoren handeln. Vielmehr kann es im konkreten Einzelfall auch zweckmäßig sein, beispielsweise akustische, induktive oder optische Sensoren zu verwenden.

Außerdem muss der akustische Geräuschsimulator nicht durch die Steuervorrichtung selbst gebildet werden, sondern kann eine separate Einheit darstellen, wobei auch vorgesehen werden kann, dass eine der Anzahl der unterschiedlichen Warngeräusche entsprechende Anzahl von Geräuschsimulatoren der Steuervorrichtung nachgeschaltet ist.

Ferner kann zusätzlich zu der akustischen Warnung auch eine optische Warnung des Fahrers und/oder Kommandanten des Panzers erfolgen. Hierzu ist die elektronische Steuervorrichtung 13 mit einer optischen Anzeigeneinrichtung 22 verbunden.

Die Steuervorrichtung 13 ist zweckmäßigerweise programmierbar ausgebildet und ist hierzu mit einer Dateneingabeeinrichtung (Tastatur, CD-Laufwerk etc.) 23 verbunden (Fig. 2). Über diese Dateneingabeeinrichtung 23 können beispielsweise die Schwellwerte, bei denen der Geräuschsimulator aktiv wird, den Fahrzeuggegebenheiten und gegebenenfalls auch dem Umfeld des zu befahrenden Geländes angepasst werden. Außerdem können weitere Klangbilder von Geräuschen abgespeichert und zusätzlichen, an dem entsprechenden Fahrzeug anordbaren Sensoren zugeordnet werden.

Selbstverständlich ist das erfindungsgemäße akustische Fahrzeuginsasseninformationssystem nicht nur bei gepanzerten oder ungepanzerten Militärfahrzeugen, sondern auch bei zivilen Fahrzeugen entsprechend einsetzbar.

### Bezugszeichenliste

- 1: Fahrzeug, gepanzertes Fahrzeug. Kampfpanzer, Panzer
- 2-11: Sensoren
- 12: Fahrzeuginsasseninformationssystem
- 13: Steuervorrichtung
- 14: Mikroprozessor
- 15: Speicher
- 16-20: Lautsprecher
- 21: Fahrzeugboden
- 22: optische Anzeigeneinrichtung
- 23: Dateneingabeeinrichtung

## Patentansprüche

1. Akustisches Fahrzeuginsasseninformationssystem (12) zur Überwachung eines äußeren Fahrzeugumfeldes, insbesondere für gepanzerte Fahrzeuge (1), mittels an dem entsprechenden Fahrzeug (1) anordbarer Sensoren (2-11), wobei die von den Sensoren (2-11) aufgenommenen Daten akustisch an den Fahrer und/oder Kommandanten des entsprechenden Fahrzeuges (1) gemeldet werden, indem, bevor ein Ereignis real auftritt, das entsprechende natürliche Geräusch simuliert wird, **dadurch gekennzeichnet, dass** das simulierte Geräusch von einem Geräuschsimulator in einem gegenüber dem entsprechenden natürlichen Geräusch tieferen Frequenzbereich erzeugt wird.

2. Fahrzeuginsasseninformationssystem nach Anspruch 1, **dadurch gekennzeichnet, dass** die Sensoren (2-11) mit einer elektronischen Steuervorrichtung (13) verbunden sind, die mit mindestens einem akustischen Geräuschsimulator zusammenwirkt, der ein dem natürlichen Geräusch eines durch die Sensoren (2-11) überwachten möglichen Ereignisses entsprechendes analoges Geräuschsignal erzeugt und die Geräuschsignale auf einen Lautsprecher (16-20) einer Lautsprecheranordnung und/oder eine Stereo- Bordverständigungsanlage übertragen werden.

3. Fahrzeuginsasseninformationssystem nach Anspruch 1 oder 2, **dadurch gekennzeichnet, dass** die Steuervorrichtung (13) mit mindestens einem akustischen Geräuschsimulator, bestehend aus einem Mikroprozessor (14) und eine Speicher (15), zusammenwirkt, und im Speicher (15) digitale Klangbilder von Geräuschen abgelegt sind, welche den zu überwachenden Ereignissen entsprechen.

4. Fahrzeuginsasseninformationssystem nach einem der Ansprüche 1 bis 3, **dadurch gekennzeichnet, dass** die elektronische Steuervorrichtung (13) derart ausgebildet ist, dass sie die von den Sensoren (2-11) empfangenen Signale ständig überwacht und bei Überschreiten eines auf ein bestimmtes Ereignis bezogenen, vorgegebenen Grenzwertes den Geräuschsimulator aktiviert, wobei der Grenzwert derart gewählt ist, dass ein entsprechende Simulationsgeräusch bereits vor Eintritt des tatsächlichen Ereignisses erzeugt wird.

5. Fahrzeuginsasseninformationssystem nach einem der Ansprüche 1 bis 4, **dadurch gekennzeichnet, dass** zur Überwachung der Bodenfreiheit des Fahrzeuges (1), insbesondere bei Geländefahrten, als Sensoren (2, 3) Ultraschallsensoren unterhalb des Fahrzeugbodens (21) befestigt sind, und dass der Geräuschsimulator derart ausgebildet ist, dass er bei Aktivierung durch die Steuervorrichtung (13) die bei Berührung des Fahrzeugbodens (21) mit dem Erdboden typischen Kratz- oder Knirschgeräusche erzeugt.

6. Fahrzeuginsasseninformationssystem nach einem der Ansprüche 1 bis 5, **dadurch gekennzeichnet, dass** zur Überwachung der Mindestabstände des Fahrzeuges (1) beim Passieren von Engstellen im Gelände und beim Einfahren in Flugzeuge als Sensoren (4, 5) Ultraschallsensoren an den Fahrzeugecken befestigt sind und dass der Geräuschsimulator derart ausgebildet ist, dass er bei Aktivierung durch die Steuervorrichtung (13) die bei Berührung der Fahrzeugseiten mit dem Hindernis typischen Kratz- oder Knirschgeräusche erzeugt.

7. Fahrzeuginsasseninformationssystem nach Anspruch 1 bis 6, **dadurch gekennzeichnet, dass** zur Überwachung der bug- und/oder heckseitigen Abstände des Fahrzeuges (1) von einem Hindernis als Sensoren (6, 7) Ultraschallsensoren bug- und/oder heckseitig an dem Fahrzeug (1) befestigt sind, und dass der Geräuschsimulator derart ausgebildet ist, dass er bei Aktivierung durch die Steuervorrichtung (13) ein Unfallklirren erzeugt.

8. Fahrzeuginsasseninformationssystem nach einem der Ansprüche 1 bis 7, **dadurch gekennzeichnet, dass** zur Überwachung der maximalen Watttiefe beim Durchqueren von Gewässern entsprechende Sensoren (8) an dem Fahrzeug (1) angeordnet sind, und dass der Geräuschsimulator derart ausgebildet ist, dass er bei Aktivierung durch die Steuervorrichtung (13) ein Wasserplätschern erzeugt.

9. Fahrzeuginsasseninformationssystem nach einem der Ansprüche 1 bis 8, **dadurch gekennzeichnet, dass** zur Überwachung des Fahrzeugumfeldes auf einen möglichen Beschuss entsprechende Sensoren (9-11) an dem Fahrzeug (1) angeordnet sind und dass der Geräuschsimulator derart ausgebildet ist, dass er bei Aktivierung durch die Steuervorrichtung (13) einen Schussknall erzeugt.

10. Fahrzeuginsasseninformationssystem nach einem der Ansprüche 1 bis 9, **dadurch gekennzeichnet, dass** die Lautsprecheranordnung aus vier Lautsprechern (16-19) besteht, welche horizontal rund um den Fahrer und/oder um den Kommandanten des Fahrzeuges (1) angeordnet sind und einen weiteren Lautsprecher (20) umfassen, der unter dem Sitz des Fahrers und/oder des Kommandanten des Fahrzeuges (1) angeordnet ist.

11. Fahrzeuginsasseninformationssystem nach einem der Ansprüche 1 bis 10, **dadurch gekennzeichnet, dass** die von dem Geräuschsimulator erzeugten Geräusche durch einen Warnton unterlegt werden.

12. Fahrzeuginsasseninformationssystem nach einem der Ansprüche 1 bis 11, **dadurch gekennzeichnet, dass** eine taktile Unterstützung eingebunden ist.

13. Fahrzeuginsasseninformationssystem nach Anspruch 12, **dadurch gekennzeichnet, dass** Vibratoren im Fahrzeugsitz eingebunden sind, die Signale von der elektronischen Steuervorrichtung (13) erhalten.

14. Fahrzeuginsasseninformationssystem nach Anspruch 12 oder 13, **dadurch gekennzeichnet, dass** die taktile Unterstützung im Lenkrad eingebunden ist, die Signale von der elektronischen Steuervorrichtung (13) erhält.

15. Kampfpanzer (1) mit einem Fahrzeuginsasseninformationssystem (12) nach einem der Ansprüche 1 bis 14.

## Claims

1. Audible vehicle occupant information system (12) for monitoring an exterior vehicle environment, particularly for armoured vehicles (1), using sensors (2-11) that can be arranged on the relevant vehicle (1), wherein the data recorded by the sensors (2-11) are audibly reported to the driver and/or commander of the relevant vehicle (1) by virtue of the actual occurrence of an event being preceded by simulation of the corresponding natural sound, **characterized in that** the stimulated sound is produced by a sound simulator in a frequency range that is lower in comparison with the corresponding natural sound.

2. Vehicle occupant information system according to Claim 1, **characterized in that** the sensors (2-11) are connected to an electronic control apparatus (13) that interacts with at least one audible sound simulator that produces an analogue sound signal corresponding to the natural sound of a possible event monitored by the sensors (2-11), and the sound signals are transmitted to a loudspeaker (16-20) in a loudspeaker arrangement and/or to a stereo onboard notification installation.

3. Vehicle occupant information system according to Claim 1 or 2, **characterized in that** the control apparatus (13) interacts with at least one audible sound simulator, comprising a microprocessor (14) and a memory (15), and the memory (15) stores digital acoustic patterns for sounds that correspond to the events to be monitored.

4. Vehicle occupant information system according to one of Claims 1 to 3, **characterized in that** the electronic control apparatus (13) is designed such that it constantly monitors the signals received from the sensors (2-11) and activates the sound simulator if a prescribed limit value related to a particular event is exceeded, wherein the limit value is chosen such that a corresponding simulation sound is produced even before the actual event occurs.

5. Vehicle occupant information system according to one of Claims 1 to 4, **characterized in that** for the purpose of monitoring the chassis clearance of the vehicle (1), particularly for cross-country driving, ultrasonic sensors are mounted beneath the vehicle bottom (21) as sensors (2, 3), and **in that** the sound simulator is designed such that when activated by the control apparatus (13) it produces the scratching or grating sounds that are typical when the vehicle bottom (21) touches the ground.

6. Vehicle occupant information system according to one of Claims 1 to 5, **characterized in that** for the purpose of monitoring the minimum distances of the vehicle (1) when passing narrow places in the terrain and when entering aeroplanes, ultrasonic sensors are mounted at the vehicle corners as sensors (4, 5) and **in that** the sound simulator is designed such that when activated by the control apparatus (13) it produces the scratching or grating sounds that are typical when the vehicle sides touch the obstacle.

7. Vehicle occupant information system according to Claims 1 to 6, **characterized in that** for the purpose of monitoring the front and/or rear distances of the vehicle (1) from an obstacle, ultrasonic sensors are mounted at the front and/or rear of the vehicle (1) as sensors (6, 7), and **in that** the sound simulator is designed such that when activated by the control apparatus (13) it produces accident clanging.

8. Vehicle occupant information system according to one of Claims 1 to 7, **characterized in that** for the purpose of monitoring the maximum fording depth when crossing bodies of water, appropriate sensors (8) are arranged on the vehicle (1), and **in that** the sound simulator is designed such that when activated by the control apparatus (13) it produces water lapping.

9. Vehicle occupant information system according to one of Claims 1 to 8, **characterized in that** for the purpose of monitoring the vehicle environment for possible gunfire, appropriate sensors (9-11) are arranged on the vehicle (1) and **in that** the sound simulator is designed such that when activated by the control apparatus (13) it produces a gunshot report.

10. Vehicle occupant information system according to one of Claims 1 to 9, **characterized in that** the loudspeaker arrangement comprises four loudspeakers (16-19) that are arranged horizontally around the driver and/or around the commander of the vehicle (1) and comprise a further loudspeaker (20) that is arranged beneath the seat of the driver and/or the commander of the vehicle (1).

11. Vehicle occupant information system according to one of Claims 1 to 10, **characterized in that** the sounds produced by the sound simulator are backed by a warning tone.

12. Vehicle occupant information system according to one of Claims 1 to 11, **characterized in that** tactile support is incorporated.

13. Vehicle occupant information system according to Claim 12, **characterized in that** vibrators are incorporated in the vehicle seat that receive signals from the electronic control apparatus (13).

14. Vehicle occupant information system according to Claim 12 or 13, **characterized in that** the tactile support is incorporated in the steering wheel, which tactile support receives signals from the electronic control apparatus (13).

15. Battle tank (1) having a vehicle occupant information system (12) according to one of Claims 1 to 14.

## Revendications

1. Système (12) acoustique d'information pour occupants d'un véhicule destiné à surveiller un environnement extérieur au véhicule, notamment pour des véhicules blindés (1) au moyen de capteurs (2-11) pouvant être disposés sur le véhicule correspondant (1), dans lequel des données enregistrées par les capteurs (2-11) sont signalées au conducteur et/ou au commandant du véhicule correspondant (1) en simulant le bruit naturel correspondant avant qu'un événement se produise réellement, **caractérisé en ce que** le bruit simulé est généré par un simulateur de bruit dans un domaine de fréquences inférieur par rapport au bruit naturel correspondant.

2. Système d'information pour occupants d'un véhicule selon la revendication 1, **caractérisé en ce que** les capteurs (2-11) sont connectés à un dispositif de commande électronique (13) qui coopère avec au moins un simulateur de bruit acoustique générant un signal de bruit analogique correspondant au bruit naturel d'un événement éventuel surveillé par les capteurs (2-11) et **en ce que** les signaux de bruit sont transmis sur un hautparleur (16-20) d'un système de hautparleurs et/ou sur un système de communication stéréophonique de bord.

3. Système d'information pour occupants d'un véhicule selon la revendication 1 ou 2, **caractérisé en ce que** le dispositif de commande (13) coopère avec au moins un simulateur de bruit acoustique constitué d'un microprocesseur (14) et d'une mémoire (15), et **en ce que** des images de tonalités numériques de bruits sont stockées dans la mémoire (15), lesquelles tonalités correspondent à des événements à surveiller.

4. Système d'information pour occupants d'un véhicule selon l'une quelconque des revendications 1 à 3, **caractérisé en ce que** le dispositif de commande électronique (13) est conçu de manière à surveiller en permanence les signaux reçus des capteurs (2-11) et à activer le simulateur de bruit lors du dépassement d'une valeur de seuil prédéfinie relatif à un événement déterminé, dans lequel la valeur de seuil est sélectionnée de manière à générer un bruit de simulation correspondant avant même la survenue de l'événement effectif.

5. Système d'information pour occupants d'un véhicule selon l'une quelconque des revendications 1 à 4, **caractérisé en ce que**, pour surveiller la garde au sol du véhicule (1), notamment lors de déplacements tous terrains, des capteurs à ultrasons sont fixés en dessous du fond (21) du véhicule en tant que capteurs (2, 3), et **en ce que** le simulateur de bruit est conçu de manière à générer, lors de l'activation effectuée par l'unité de commande (13), des bruits de raclement ou de grincement typiques d'un contact du fond du véhicule (21) avec le sol.

6. Système d'information pour occupants d'un véhicule selon l'une quelconque des revendications 1 à 5, **caractérisé en ce que**, pour surveiller les distances minimum du véhicule (1) lors de la traversée de passages étroits sur le terrain et lors de l'entrée dans des aéronefs, des capteurs à ultrasons sont fixés aux angles du véhicule en tant que capteurs (4, 5), et **en ce que** le simulateur de bruit est conçu pour générer, lors de l'activation effectuée par le dispositif de commande (13), des bruits de raclement ou de grincement typiques d'un contact des côtés du véhicule avec l'obstacle.

7. Système d'information pour occupants d'un véhicule selon l'une quelconque des revendications 1 à 6, **caractérisé en ce que**, pour surveiller les distances des côtés avant et/ou arrière du véhicule (1) par rapport à un obstacle, des capteurs à ultrasons sont fixés aux côtés avant et/ou arrière du véhicule (1) en tant que capteurs (6, 7), et **en ce que** le simulateur de bruit est conçu pour générer, lors de l'activation effectuée par le dispositif de commande (13), un bruit d'accident.

8. Système d'information pour occupants d'un véhicule selon l'une quelconque des revendications 1 à 7, **caractérisé en ce que**, pour surveiller la profondeur de gué maximale lors de la traversée d'étendues d'eau, des capteurs (8) correspondants sont disposés sur le véhicule (1), et **en ce que** le simulateur de bruit est conçu de manière à générer, lors de l'activation effectuée par l'unité de commande (13), un bruit de clapotis d'eau.

9. Système d'information pour occupants d'un véhicule selon l'une quelconque des revendications 1 à 8, **caractérisé en ce que**, pour surveiller l'environnement du véhicule lors d'un tir éventuel, des capteurs correspondants (9-11) sont disposés sur le véhicule (1), et **en ce que** le simulateur de bruit est conçu pour générer, lors de l'activation effectuée par le dispositif de commande (13), un bruit de tir.

10. Système d'information pour occupants d'un véhicule selon l'une quelconque des revendications 1 à 9, **caractérisé en ce que** le système de hautparleur est constitué de quatre hautparleurs (16-19) qui sont disposés de manière circulaire horizontalement autour du conducteur et/ou du commandant du véhicule (1) et comprennent un hautparleur (20) supplémentaire qui est disposé en dessous du siège du conducteur et/ou du commandant du véhicule (1).

11. Système d'information pour occupants d'un véhicule selon l'une quelconque des revendications 1 à 10, **caractérisé en ce que** les bruits générés par le simulateur de bruit sont couverts par une tonalité d'alarme.

12. Système d'information pour occupants d'un véhicule selon l'une quelconque des revendications 1 à 11, **caractérisé en ce qu'**un support tactile est intégré.

13. Système d'information pour occupants d'un véhicule selon la revendication 12, **caractérisé en ce que** des vibreurs sont intégrés au siège de conducteur, ceux-ci recevant des signaux du dispositif de commande électronique (13).

14. Système d'information pour occupants d'un véhicule selon la revendication 12 ou 13, **caractérisé en ce que** le support tactile est intégré au volant de direction qui reçoit des signaux du dispositif de commande électronique (13).

15. Char de combat (1) comportant un système (12) d'information pour occupants d'un véhicule selon l'une quelconque des revendications 1 à 14.
